Europäisches Patentamt

European Patent Office

Office européen des brevets

(11) Veröffentlichungsnummer : **0 282 769 B1**

(12)   # EUROPÄISCHE PATENTSCHRIFT

(45) Veröffentlichungstag der Patentschrift :
02.05.91 Patentblatt 91/18

(51) Int. Cl.$^5$ : **A22C 7/00**

(21) Anmeldenummer : **88102598.5**

(22) Anmeldetag : **23.02.88**

(54) **Vorrichtung zum Umformen von Lebensmitteln, insbesondere von Fleischwaren, in eine vorgegebene Gestalt.**

(30) Priorität : **14.03.87 DE 3708387**

(43) Veröffentlichungstag der Anmeldung :
**21.09.88 Patentblatt 88/38**

(45) Bekanntmachung des Hinweises auf die Patenterteilung :
**02.05.91 Patentblatt 91/18**

(84) Benannte Vertragsstaaten :
**AT BE CH DE ES FR GB GR IT LI LU NL SE**

(56) Entgegenhaltungen :
**DE-A- 2 347 280**
**DE-A- 3 617 275**
**FR-A- 1 271 402**
**FR-A- 1 430 246**

(56) Entgegenhaltungen :
**FR-A- 2 150 473**
**FR-A- 2 238 437**
**US-A- 1 890 458**
**US-A- 3 722 034**

(73) Patentinhaber : **K. SCHNEIDER GMBH & CO.**
**KG FLEISCHWAREN**
**Wangener Strasse 63**
**W-7000 Stuttgart 1 (DE)**

(72) Erfinder : **Birk, Alfons**
**Liststrasse 74**
**W-7000 Stuttgart 1 (DE)**

(74) Vertreter : **Rüger, Rudolf, Dr.-Ing. et al**
**Patentanwälte Dr.-Ing. R. Rüger Dipl.-Ing. H.P.**
**Barthelt Webergasse 3 Postfach 348**
**W-7300 Esslingen/Neckar (DE)**

## Beschreibung

Die Erfindung betrifft eine Vorrichtung zum Umformen von Lebensmitteln, insbesondere von Fleischwaren, in eine vorgegebene Gestalt.

Beim Portionieren von Lebensmitteln für Fertigpackungen ist es von Vorteil, wenn das Lebensmittelstück, von dem die Portionen heruntergeschnitten werden sollen, eine angenähert prismatische Gestalt aufweist, weil dann die abgeschnittenen Scheiben jeweils etwa das gleiche Gewicht haben. Zum Erzeugen einer Packung wird dann immer die gleiche Anzahl von Scheiben benötigt, so daß ein Wiegen zum Bestimmen der für die Packung benötigten Lebensmittelscheiben entbehrlich ist. Die fertige Packung wird auch ohne diesen Wiegevorgang ein Gewicht aufweisen, das innerhalb geringer Toleranzschwankungen vom Sollgewicht liegt. Bei einigen Lebensmitteln läßt sich die prismatische Gestalt im wesentlichen schon während der Herstellung erzeugen, während andere Lebensmittel starke Abweichungen von dieser Idealform zeigen. Ein Beispiel für ein stark unregelmäßig geformtes Lebensmittelstück ist ein Räucherschinken, der praktisch von Scheibe zu Scheibe eine andere Querschnittsfläche aufweist.

Eine gattungsgemäße Vorrichtung ist aus der US-A-1 890 458 bekannt. Die Form ist hierbei ein quadratisches kurzes Rohrstück, das auf dem Maschinengestell so steht, daß die trichterartige Erweiterung nach oben zeigt, während das gegenüberliegende Ende des Rohrstücks mit Hilfe seitlich auskragender Flansche auf dem Maschinengestellt gehaltert ist. Von unten her sitzt in dem Rohrstück ein Kolben, dessen Querschnittsfläche an den Innenraum des Rohrstücks angepaßt ist und der mit Hilfe einer Kolbenstange vertikal auf- und abbewegbar ist. Ein zweiter Kolben sitzt an einer zweiten Kolbenstange, die ebenfalls vertikal auf- und abbewegbar ist, jedoch oberhalb des Rohrstückes gelagert ist.

Bei der Verwendung der bekannten Vorrichtung wird zunächst der untere Kolben in eine untere Lage gebracht, so daß gerade eben das Rohrstück an seiner Unterseite verschlossen ist. Bei angehobenem oberem Kolben kann nun durch die trichterförmige Erweiterung das umzuformende Lebensmittelstück eingegeben werden. Sodann wird mit Hilfe der Kolbenstange der obere Kolben niedergepreßt, damit das Lebensmittelstück eine Gestalt annimmt, die von den beiden Kolben und dem sich zwischen ihnen erstreckenden Rohrstück begrenzt ist. Sodann wird der obere Kolben angehoben und durch Anheben des unteren Kolbens wird das Lebensmittelstück durch die Eingabeöffnung nach oben herausgeschoben, so daß es von der Oberseite des unteren Kolbens abgenommen werden kann.

Die bekannte Vorrichtung bedingt eine Umkehrung der Bewegungsrichtung des Materialflusses, da die Lebensmittel durch die Eingabeöffnung sowohl in die Vorrichtung eingegeben als auch aus dieser herausgenommen werden.

Bei einer anderen Vorrichtung zum Umformen von Lebensmitteln nach der FR-A-1 271 402 ist eine Art quaderförmiger Kasten vorgesehen, dessen beide langen Schmalseiten starr und unbeweglich miteinander verbunden sind. Eine kurze Schmalseite wird von einer quer zu den langen Schmalseiten beweglichen Platte gebildet, die die an dieser Stelle befindliche Austrittsöffnung der Form wahlweise verschließt. Die der Platte gegenüberliegende kurze Schmalseite ist ein Kolben, der mittels einer Kolbenstange parallel zu den langen Schmalseiten in Richtung auf die Verschlußplatte für die Austrittsöffnung vorgeschoben werden kann.

Die Oberseite der Form ist ein einfacher Deckel, der an einer der langen Schmalseiten anscharniert ist, während die Unterseite wiederum ein zwischen den langen Schmalseiten auf- und abbewegbarer Kolben ist.

Um mit dieser Vorrichtung ein Lebensmittelstück umzuformen, muß zunächst der den Boden der Form bildende Kolben abgesenkt sowie der an der kurzen Schmalseite befindliche Kolben aus der Form zurückgezogen werden. Nach Öffnen des Deckels und Vorschieben der Verschlußplatte wird das Lebensmittelstück in die Form eingelegt und es kann sodann der Deckel verschlossen werden. Daraufhin wird der bodenseitige Stempel mit Kraft so weit vorgeschoben, daß seine Oberseite von dem Deckel einen Abstand entsprechend der Vertikalabmessung des anderen Stempels hat. Dann wird auch dieser an der kurzen Schmalseite befindliche Stempel vorgeschoben, bis die gewünschte Verformung stattgefunden hat. Anschließend wird die Verschlußplatte geöffnet und es wird von dem an der Schmalseite befindlichen Kolben das umgeformte Lebensmittelstück über die Austritts öffnung herausgeschoben.

Ausgehend hiervon ist es Aufgabe der Erfindung, eine Vorrichtung zum Umformen von Lebensmitteln zu schaffen, die mit wenigen beweglichen Teilen auskommt und die ohne weiteres eine Verkettung des Materialflusses innerhalb einer Lebensmittelverarbeitungsanlage ermöglicht.

Diese Aufgabe wird erfindungsgemäß durch die Vorrichtung mit den Merkmalen des Anspruches 1 gelöst.

Mit Hilfe der Form und des Stempels kann ein eingegebenes Lebensmittelstück wenigstens zeitweise in eine gewünschte prismatische Gestalt umgeformt werden, so daß die heruntergeschnittenen Scheiben immer etwa gleiche Fläche und damit gleiches Gewicht aufweisen. Die Umformung geschieht dabei nicht dadurch, daß Teile des umzuformenden Lebensmittelstücks weggeschnitten werden, sondern indem das Lebensmittelstück in die gewünschte Form gepreßt wird, die es bis zum kurz darauf folgenden Schneiden beibehält.

Der von der in sich geschlossenen Seitenwand begrenzte Hohlraum hat einen Querschnitt, der gleich der gewünschten prismatischen Gestalt des umgeformten Lebensmittels entspricht.

Besonders einfach läßt sich das umgeformte Lebensmittel aus der Form herausbringen, wenn der Boden der Form beweglich ist und zwischen einer Stellung, in der die Form bodenseitig geschlossen ist, in eine Stellung überführt werden kann, in der die Form bodenseitig offen ist. Durch einfaches Vorschieben des Formstempels läßt sich das umgeformte Lebensmittel aus der Form ausstoßen. Der Boden wird dabei bevorzugt von einer planparallelen Platte gebildet, so daß er ohne Beschädigung des Lebensmittels von der Auswurföffnung der Form weggezogen werden kann. Bevorzugt ist der Boden rechtwinklig zu der Mittelachse längsverschieblich geführt, die von der in sich geschlossenen Seitenwand der Form umschlossen ist.

Wenn die Form eine Einfüllöffnung aufweist, die in irgendeiner Abmessung, kleiner ist als die entsprechende Abmessung der Querschnittsfläche des umzuformenden Lebensmittelstücks, ist zweckmäßigerweise vor der Einfüllöffnung ein trichterförmiger Vorsatz angeordnet, um zu verhindern, daß Teile des Lebensmittels an der Einfüllöffnung der Form vom Stempel abgeschnitten werden. Eine solche Anordnung ist insbesondere beim Umformen von Räucherschinken zweckmäßig, die im Querschnitt teilweise kleiner und teilweise größer sind als der Querschnitt des Innenraums der Form.

Bei vertikaler Anordnung der Vorrichtung genügt es, das umzuformende Lebensmittelstück in die Form bzw. den trichterförmigen Vorsatz einzulegen. Wird hingegen der horizontale Aufbau bevorzugt, befindet sich zweckmäßigerweise vor dem trichterförmigen Vorsatz ein Auflagetisch für das einzuschiebende und umzuformende Lebensmittelstück. Dabei bildet die Tischfläche, der angrenzende Wandbereich des trichterförmigen Vorsatzes und der ebenfalls sich daran anschließende Wandbereich der Form eine durchgehende Gleitfläche, auf der das Lebennsmittelstück von dem Stempel in den innenraum der Form vorgeschoben wird. Diese Gleitfläche ist bevorzugt glatt und eben.

Zum Umformen von Räucherschinken hat es sich als vorteilhaft herausgestellt, wenn der trichterförmige Vorsatz in einer Richtung einen Öffnungswinkel von 30° aufweist, während der der Gleitfläche gegenüberliegende Wandbereich des trichterförmigen Fortsatzes an seinem von der Einfüllöffnung der Form abliegenden Ende konvex nach außen bombiert ist.

Im übrigen sind vorteilhafte Weiterbildungen der Erfindung Gegenstand von Unteransprüchen.

In der Zeichnung ist ein Ausführungsbeispiel des Gegenstandes der Erfindung dargestellt. Es zeigen:

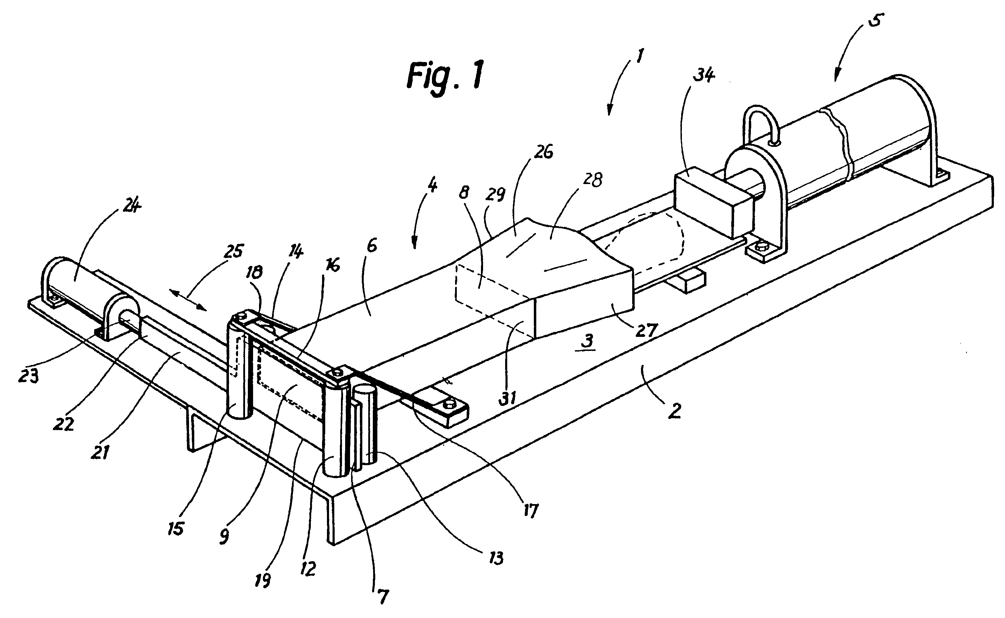

Fig. 1 eine Vorrichtung zum abfallfreien Umformen von Lebensmitteln, in einer perspektivischen Gesamtansicht,

Fig. 2 die Vorrichtung nach Fig. 1, in einer Draufsicht, und

Fig. 3 die Einfüllöffnung der Vorrichtung nach Fig. 1, in einer Draufsicht.

Eine Vorrichtung 1 zum abfallfreien Umformen von Lebensmitteln, insbesondere Fleischwaren, in eine etwa quaderförmige Gestalt enthält ein Grundgestell 2, auf dessen Oberseite 3 eine Form 4 und gegenüberliegend ein zweiseitig wirkender Druckluftzylinder 5 angeordnet sind. Die Form 4 enthält eine in sich geschlossene und ein Vierkantrohrstück bildende Seitenwand 6 sowie einen hin- und herbewegbaren Boden 7. Die in sich geschlossene Seitenwand 6 läßt zwei Öffnungen 8 und 9 gleichen Querschnitts entstehen, von denen die Öffnung 8 dem Druckmittelzylinder 5 zugekehrt und die Öffnung 9 dem Boden 7 benachbart ist. Die in sich geschlossene Seitenwand 6 umschließt eine Mittel- oder Längsachse 11, die parallel zu der Oberseite 3 des Gestells 2 und der Betätigungsrichtung des Druckmittelzylinders 5 verläuft.

Von der in sich geschlossenen Seitenwand 6, dem Boden 9 sowie der Eintrittsöffnung 8 wird ein quaderförmiger Innenraum umschlossen, der dieselbe Gestalt aufweist, in die das Lebensmittelstück umzuformen ist.

Den Boden 7 bildet eine planparallele Platte, die mittels auf der Oberseite 3 des Gestells 2 verankerter Pfosten oder Pfeiler 12, 13, 14 und 15 rechtwinklig zu der Längsachse 11 hin- und herverschieblich geführt ist. Die Pfeiler 12 .. 15 sind, wie dargestellt, paarweise zu beiden Seiten der Öffnung 9 angeordnet, und zwar befinden sich die Pfeiler 13 und 14 auf der der Seitenwand 6 benachbarten Seite des Bodens 7, während die beiden Pfeiler 12 und 15 auf der abliegenden Seite aufgestellt sind. Den Abstand, den jedes Paar Pfeiler 12, 13 bzw. 14, 15 voneinander hat, entspricht etwa der Dicke des Bodens 7 bzw. ist geringfügig größer als diese.

Die beiden Pfeiler 13 und 14, die seitlich neben der Seitenwand 6 angeordnet sind, stehen mit ihrer Umfangsfläche geringfügig über die Öffnung 9 über, um den Boden 7 mit seiner benachbarten Seite in einem sehr geringen Abstand von der Öffnung 9 zu halten.

Die an der Rückseite des Bodens 7 befindlichen Pfeiler 12 und 15 müssen die auf den Boden wirkende Druckkraft beim Umformen aufnehmen und sind deshalb an ihrem freien oberen Ende durch eine Strebe 16 untereinander und durch schrägverlaufende Streben 17 und 18 in Richtung auf die Öffnung 8 gegen die Oberseite 3 des Gestells 2 abgestützt, wo sie andernends verankert sind.

Mit seiner Unterkante 19 gleitet der rechteckige Boden 7 unmittelbar auf der planen Oberseite 3 des Gestells 2.

Die Verschiebung des Bodens 7 zum Öffnen undSchließen der Öffnung 9 geschieht mit Hilfeeines sich seitlich von dem Boden 7 weg erstreckenden Fortsatzes 21, der als Zug- und Druckstange für den Boden 7 dient und eine Stärke aufweist, die gleich der Stärke des Bodens 7 ist, damit sich der Fortsatz 21 ungehindert zwischen die Pfeilerpaaren 12. 13 bzw. 14, 15 hindurchbewegew kann. Um eine Verminderung des Querschnitts der Öffnung 9 durch den Fortsatz 21 zu vermeiden, ist die Form 4 mit Hilfe von nicht weiter veranschaulichten Distanzstücken über der Oberseite 3 des Gestells 2 erhöht befestigt, und zwar so, daß di Unterkante der Öffnung 9 höher über dir Oberseite 3 liegt als der Fortsatz 21, gegenüber der Oberseite 3 gemessen, hoch ist. Das freie Ende des Fortsatzes 21 ist bei 22 mit einer Kolbenstange 23 eines zweiseitig wirkenden Druckluftzylinders 24 verbunden, dessen Druckmittelanschlüsse aus Darstellungsgründen nicht sichtbar sind. Durch Bitätigung dis Druckmittelzylinders 24 läßt sich der Boden 7 parallel in Richtung einis Doppelpfeiles 25 hin- und herbewegen.

Die Öffnung 8 bildit die Einfüllöffnung, über die das umzuformende Lebensmittelstück in die Form 4 gelangt. Um zu verhindern, daß beim Eindrücken des umzuformenden Lebensmittels in die Form 4 größere Teile weggeschnitten werden, ist in der Einfüllöffnung 8 ein trichterförmiger Vorsatz 26 zugeordet, dessen Querschnittsflache sich von der Einfüllöffnung 8 wig erweitert. Der trichterförmige Vorsatz 26 wird von vier an den Kanten miteinandir verbundenen Wänden 27, 28, 29 und 31 begrenzt, die einenends einstückig mit der in sich geschlossenen Seitenwand 6 der Form 4 verbunden sind. Dabei verläuft die untere Wand 31 in unmittelbarer Verlängerung des untenliegenden Bereiches der in sich geschlossenen Seitenwand 6, während, die beiden seitlichen Wände 27 und 29 in Richtung auf die Einfüllöffnung konvergieren und dort mit Knick in die geschlossene Seitenwand 6 übergehen. Die seitlichen Wände 27 und 29 verlaufen jeweils etwa unter 15° gegenüber der Längsachse 11, d.h. sie schließen miteinander einen Öffnungswinkel von ca. 30° ein.

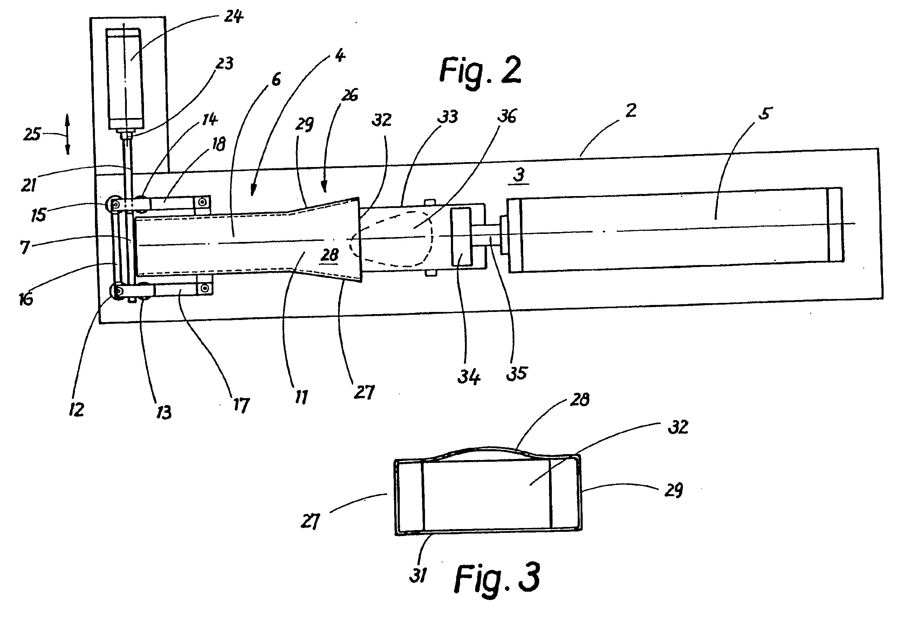

Die obere Wand 28 des trichterförmigen Vorsatzes 26 ist nach außen konvex bombiert, wie dies Fig. 3 in der Ansicht auf die von dem trichterförmigen Vorsatz 26 begrenzte Öffnung 32 zeigt. Die nach außen weisende Bombierung der oberen Wand 28 nimmt sowohl in Richtung auf die beiden seitlichen Wande 27, 29 als auch in Richtung auf die Einfüllöffnung 8 allmählich und verrundet ab, um möglichst wenig scharfe Kanten zu erzeugen, an denen Teile des umzuformenden Lebensmittelstücks abgequetscht werden könnten.

Zwischen der Öffnung 32 des trichterförmigen Vorsatzes 26 und dem Pneumatikzylinder 5 ist auf dem Gestell 2 auf dessen Oberseite 3 ein Auflagetisch 33 mit einer planen Oberseite befestigt, und zwar in einer solchen Höhe, daß die Fläche des Tisches 33 glatt in die untere Wand 31 des trichterförmigen Vorsatzes 29 übergeht. Der Tisch 33 bildet zusammen mit der Wand 31 sowie dem entsprechenden sich daran anschließenden Bereich der in sich geschlossenen Seitenwand 6 eine Gleitfläche für das umzuformende Lebensmittelstück.

Das Einpressen des umzuformenden Lebensmittelstücks geschieht mit Hilfe eines Stempels 34, der auf dem vorderen freien Ende einer Kolbenstange 35 des Pneumatikzylinders 5 sitzt. Der Querschnitt des Stempels 34 ist gleich dem Querschnitt des von der in sich geschlossenen Seitenwand 6 begrenzten rechteckigen Rohrstücks, so daß der Stempel 34 von der Kolbenstange 35, die koaxial zu der Mittelachse 11 verläuft, ohne weiteres in die Form 4 vorgeschoben werden kann.

Die Benutzung der insoweit beschriebenen Vorrichtung geschieht folgendermaßen :

Mit Hilfe nicht welter gezeigter Ventile wird die dem Stempel 34 benachbarte Zylinderseite des Pneumatikzylinders 5 mit Druckluft gefüllt, was die Kolbenstange 35 in den Druckmittelzylinder 5 zurückgleiten läßt. Am Ende des möglichen Hubs der Kolbenstange 35 steht die vordere plane Stirnseite des Stempels 34 in einem relativ weiten Abstand von der Öffnung 32 des trichterförmigen Fortsatzes 26. Der Abstand ist groß genug, um ohne Behinderung ein Lebensmittelstück, bspw. einen Räucherschinken, mit dem dünnsten Ende voraus in den trichterförmigen Vorsatz 26 ein bzw. auf den Tisch 33 aufzulegen. Gleichzeitig mit der Rückbewegung des Stempels 34 in die in den Figuren gezeigte Ausgangslage wird, falls noch nicht geschehen, der Boden 7 vor die Ausgabeöffnung 9 bewegt, indem ebenfalls die entsprechende Zylinderkammer des Druckmittelzylinders 24 mit Druckluft gefüllt wird, wodurch die Kolbenstange 23 bis zum Anschlag zurückgezogen wird. In dieser Stellung verschließt der Boden 7 die Öffnung 9 vollständig. Es wird jetzt der Druckmittelzylinder 5 umgesteuert, und es wird seine hintenliegende Zylinderkammer mit Druckluft gefüllt, während die andere entlüftet wird. Hierdurch wird die Kolbenstange 25 ausgetrieben und der Stempel 34 in Richtung auf das eingelegte, gestrichelt angedeutete Lebensmittelstück 36 vorgeschoben. Im Verlauf des weiteren Austreibens der Kolbenstange 35 drückt der Stempel 34 das Lebensmittelstück 36 tiefer in den trichterförmigen Vorsatz 26 und durch diesen hindurch, wobei das Lebensmittelstück 33 in den Innenraum der Form 4 gelangt. Dabei tritt in dem Lebensmittelstück 36 ab der derjenigen Stelle, ab der sein Querschnitt größer ist als er Querschnitt der Eintrittsöffnung 8, eine gewisse Streckung auf.

Im Verlauf der Vorschubbewegung des Stempels 34 ist irgendwann das Lebensmittelstück 36 in die Form 4 eingeschoben, so daß es bei einem weiteren Vorschieben des Stempels 34 zwischen dessen Stirnseite und dem Boden 7 zusammengepreßt wird. Hierdurch wird das Lebensmittelstück 36 veranlaßt, in demjenigen Bereich seinen Querschnitt zu vergrößern, in dem es ursprünglich kleiner als die lichte Weite der Form 4 gewesen ist. Das Vortreiben bspw. eines Räucherschinkens mit handelsüblichen Abmessungen geschieht mit einer Kraft von ca. 12 000 N. Der Schinken nimmt hierbei die von dem Boden 7, der in sich geschlossenen Seitenwand und dem Stempel 34 begrenzte quaderförmige Gestalt im wesentlichen ein.

Nach Erreichen des voreingestellten Grenzdruckes, der die obengenannte Druckkraft entstehen läßt, wird zunächst der Druck in dem Druckmittelzylinder 5 au Außendruck zurückgenommen, wodurch der Stempel 34 kräftefrei wird. Jetzt wird der Druckmittelzylinder 24 in umgekehrter Richtung in Betrieb genommen und die Kolbenstange 23 ausgefahren, wodurch über die Kupplung mit Hilfe des Fortsatzes 21 der Boden 7 von der Öffnung 9 weggeschoben wird. In der anderen Endlage des Druckmittelzylinders 24 ist die Öffnung 9 vollkommen frei, und der Fortsatz 21 verläuft unterhalb der Öffnung 9. In dieser Endstellung befindet sich der Boden 7 gerade noch zwischen den beiden Pfeilern 12 und 13, während er vorher beim Umformen des Lebensmittelstücks 36 sich an die beiden Pfeiler 12 und 15 mit seinen seitlichen Enden abgestützt hat.

Durch erneutes Ingangsetzen des Druckmittelzylinders 5 wird der Stempel 34 weiter in Richtung auf die Form 4 vorgeschoben, wobei das Lebensmittelstück 36 aus der Form 4 durch die Öffnung 9 ausgetrieben wird. Sobald des Lebensmittelstück 36 die Form 4 verlassen hat, werden beide Druckmittelzylinder 5 und 24 wiederum in umgekehrter Richtung in Gang gesetzt, um einerseits den Stempel 34 aus der Form 4 in die in den Figuren gezeigte Lage zurückzuziehen, und an- dererseits den Boden 7 erneut vor die Öffnung 9 zu bringen. Die Vorrichtung 1 ist damit bereit, ei.n weiteres Lebensmittelstück 36 aus einer unregelmäßigen, natürlichen Form in die gewünschte prismatische Form zu bringen.

**Ansprüche**

1. Vorrichtung zum Umformen von Lebensmitteln, insbesondere von Fleischwaren, in eine vorgegebene Gestalt, mit einer auf einem Gestell (2) angeordneten Form (4), die ein Seitenwände (6) der Form bildendes Rohrstück aufweist, von dem ein Ende eine Einfüllöffnung (8) der Form (4) zum Eingeben des Lebensmittels bildet und das an diesem Ende mit einem trichterförmigen Vorsatz (26) versehen ist, dessen Querschnitt an seiner engsten Stelle gleich dem Querschnitt der Einfüllöffnung (8) ist und dessen Querschnittsfläche sich von der Einfüllöffnung (8) weg vergrößert, und mit einem an dem Gestell (2) beweglich gelagerten Stempel (34), der durch die Einfüllöffnung (8) in die Form (4) und aus dieser heraus bewegbar ist, dadurch gekennzeichnet, daß das der Einfüllöffnung (8) gegenüberliegende Ende des Rohrstücks eine Austrittsöffnung (9) der Form (4) bildet, daß an diesem Ende des Rohrstücks ein Boden (7) vorgesehen ist, der im wesentlichen rechtwinklig zu einer der Seitenwände (6) des Rohrstücks verschieblich gelagert ist und zwischen einer Stellung, in der die Austrittsöffnung (9) verschlossen ist, in eine andere Stellung überführbar ist, in der die Austrittsöffnung (9) geöffnet ist, daß die Austrittsöffnung (9) die gleiche Querschnittsfläche und die gleiche Querschnittsgestalt wie die Einfüllöffnung (8) aufweist und daß der trichterförmige Vorsatz (26) in einem Bereich (31) seiner Wand in Verlängerung des zugehörigen Bereiches der entsprechenden Seitenwand (6) des Rohrstücks verläuft.

2. Vorrichtung nach Anspruch 1, dadurch gekennzeichnet, daß die in sich geschlossene Seitenwand (6) einen prismatischen Raum begrenzt, bei dem der Querschnitt in jeder zu der Einfüllöffnung (8) parallelen Ebene gleich dem Querschnitt der Einfüllöffnung (8) ist.

3. Vorrichtung nach Anspruch 2, dadurch gekennzeichnet, daß der Querschnitt rechteckig ist.

4. Vorrichtung nach Anspruch 1, dadurch gekennzeichnet, daß der Boden (7) der Form (4) beweglich angebracht ist und sich an dem der Einfüllöffnung (8) gegenüberliegenden Ende des von der in sich geschlossenen Seitenwand (6) gebildeten Rohrstücks angeordnet ist.

5. Vorrichtung nach Anspruch 1, dadurch gekennzeichnet, daß neben der Form (4) Führungsglieder (12.. 15) für den Boden (7) ortsfest vorgesehen sind.

6. Vorrichtung nach Anspruch 5, dadurch gekennzeichnet, daß die Führungsglieder in Gestalt von Pfosten (12.. 15) ausgebildet sind, die paarweise mit Abstand nebeneinander an zwei sich gegenüberliegenden Seiten neben der Form (4) auf dem Gestell (2) parallel angeordnet sind, daß die Pfosten jedes Paares (12, 13 ; 14, 15) voneinander entsprechend der Dicke des Bodens (7) beabstandet sind und daß der Boden (7) zwischen jedem Paar von Pfosten (12, 13 ; 14, 15) hindurchbewegbar ist.

7. Vorrichtung nach Anspruch 1, dadurch gekennzeichnet, daß der Boden (7) von einer planparallelen Platte gebildet ist.

8. Vorrichtung nach Anspruch 4, dadurch, gekennzeichnet, daß der Boden (7) mit einer Betätigungseinrichtung (24) gekuppelt ist, durch die der Boden (7) zwischen seinen beiden Stellungen hin- und herbewegbar ist.

9. Vorrichtung nach Anspruch 8, dadurch gekennzeichnet, daß der Boden (7) zur Kupplung mit der zugehörigen Betätigungseinrichtung (24) einen flachkantigen Fortsatz (21) trägt, dessen Stärke der Stärke des Bodens (7) entspricht und dessen Länge größer ist als der Bewegungshub des Bodens (7) zwischen der geöffneten und der geschlossenen Stellung der Form (4).

10. Vorrichtung nach Anspruch 1, dadurch gekennzeichnet, daß der Stempel (34) an einem Bewegungsglied (35) einer Betätigungseinrichtung (5) sitzt.

11. Vorrichtung nach den Ansprüchen 8 oder 9, dadurch gekennzeichnet, daß die Betätigungseinrichtung (5, 24) für den Stempel (34) und/oder für den Boden (7) von je einem Druckmittelzylinder, vorzugsweise einem Druckluftzylinder, gebildet ist, dessen Kolbenstange(en) (23, 35) mit dem Boden (7) bzw. dem Stempel (34) verbunden ist (sind).

12. Vorrichtung nach Anspruch 1, dadurch gekennzeichnet, daß der Querschnitt des trichterförmigen Vorsatzes (26) eine Gestalt aufweist, die etwa der Gestalt des Querschnitts des Innenraums der Form (4), gemessen an einer zu der Einfüllöffnung (8) parallelen Ebene, ähnlich ist.

13. Vorrichtung nach Anspruch 1, dadurch gekennzeichnet, daß der trichterförmige Vorsatz (26), gemessen in einer zu seiner Längsachse (11) parallelen Ebene, einen Öffnungswinkel von ca. 30° aufweist.

14. Vorrichtung nach Anspruch 1, dadurch gekennzeichnet, daß zwischen dem in seiner zurückgezogenen Stellung befindlichen Stempel (34) und der von der Einfüllöffnung (8) der Form (4) abliegenden Ende (32) des trichterförmigen Vorsatzes (26) ein Auflagetisch (33) für das umzuformende Lebensmittel (36) angeordnet ist.

15. Vorrichtung nach Anspruch 14, dadurch gekennzeichnet, daß die Fläche des Auflagetisches (33), der sich daran anschließende Bereich (31) der Wand des trichterförmigen Vorsatzes (26) und der zugehörige Wandbereich der in sich geschlossenen Seitenwand (6) der Form (4) eine glatte und gerade, vorzugsweise ebene Gleitfläche, für das umzuformende Lebensmittel (36) bildet.

16. Vorrichtung nach Anspruch 15, dadurch gekennzeichnet, daß die Form (4), der trichterförmige Vorsatz (26) und der Tisch (33) im Bereich der Gleitfläche einstückig oder stoffschlüssig verbunden ist.

17. Vorrichtung nach Anspruch 15, dadurch gekennzeichnet, daß der trichterförmige Vorsatz (26) im der Gleitfläche gegenüberliegenden Bereich (28) konvex nach außen bombiert ist.

18. Vorrichtung nach Anspruch 11, dadurch gekennzeichnet, daß die den Stempel (34) tragende kolbenstange (35) mit ihrer Achse im wesentlichen auf der von der in sich geschlossenen Seitenwand (6) der Form (4) definierten Mittelächse (11) längsverschieblich ist.

## Claims

1. An apparatus of the reshaping of foodstuffs, more particularly meat products, into a given shape, having : a mould (4) which is disposed on a frame (2) and has a tubular member which forms side walls (6) of the mould and one end of which forms a filling aperture (8) of the mould (4) for the introduction of the foodstuff and which has at said end a funnel-shaped attachment (26) whose cross-section at its narrowest place is equal to the cross-section of the filling aperture (8) and whose cross-sectional area increases in the direction away from the filling aperture (8) ; and a plunger (34) which is movably mounted on the frame (2) and can be moved into and out of the mould (4) through the filling aperture (8), characterized in that the end of the tubular member opposite the filling aperture (8) forms an outlet aperture (9) of the mould (4) ; provided at said end of the tubular member is a bottom member (7) which is mounted to move substantially at right angles to one (6) of the side walls of the tubular member and can be transferred between a position in which the outlet aperture (9) is closed into another position in which the outlet aperture (9) is opened ; the outlet aperture (9) has the same cross-sectional area and the same cross-sectional shape as the filling aperture (8) ; and in a zone (31) of its wall the funnel-shaped attachment (26) extends in prolongation of the associated zone of the corresponding side wall (6) of the tubular member.

2. An apparatus according to claim 1, characterized in that the tubular side wall (6) defines a prismatic space in which the cross-section is equal to the cross-section of the filling aperture (8) in each plane parallel with the filling aperture (8).

3. An apparatus according to claim 2, characterized in that the cross-section is rectangular.

4. An apparatus according to claim 1, characterized in that the bottom member (7) of the mould (4) is mounted movably and is disposed at that end of the tubular member formed by the tubular side wall (6) which is opposite the filling aperture (8).

5 An apparatus according to claim 1, characterized in that guide members (12.. 15) for the bottom member (7) are provided fixed adjacent the mould (4).

6. An apparatus according to claim 5, characterized in that the guide members take the form of posts (12.. 15) which are arranged in pairs on two opposite sides and disposed parallel and spaced from each other adjacent the mould (4) on the frame (2) ; the posts of each pair (12, 13 ; 14, 15) are spaced from one another in accordance with the thickness of the bottom member (7) ; arid the bottom member (7) can be moved through between each pair of posts (12, 13 ; 14, 15).

7. An apparatus according to claim 1, characterized in that the bottom member (7) is formed by a plane-parallel plate.

8. An apparatus according to claim 4, characterized in that the bottom member (7) is coupled to an actuating device (24) via which the bottom member (7) can be horizontally reciprocated between its two positions.

9. An apparatus according to claim 8, characterized in that for coupling to the associated actuating device (24), the bottom member (7) has a flat extension (21) whose thickness corresponds to the thickness of the end member (7) and whose length is greater than the distance of movement of the end member (7) between the opened and closed positions of the mould (4).

10. An apparatus according to claim 1, characterized in that the plunger (34) is disposed on a movement member (35) of an actuating device (5).

11. An apparatus according to claims 8 or 9, characterized in that the actuating devices (5, 24) for the plunger (34) and/or for the bottom member formed in each case by a pressure fluid cylinder, preferably a compressed air cylinder, the or each of whose piston rods (23, 35) is connected to the bottom member (7) and the plunger (34) respectively.

12. An apparatus according to claim 1, characterized in that the cross-section of the funnel-shaped attachment (26) has a shape which is substantially similar to the shape of the cross-section of the inside of the mould (4), measured along a plane parallel with the filling aperture (8).

13. An apparatus according to claim 1, characterized in that the funnel-shaped attachment (26), measured in a plane parallel with its longitudinal axis (11), has an opening angle of approximately 30°.

14. An apparatus according to claim 1, characterized in that disposed between the plunger (34) situated in its withdrawn position and the end (32) of the funnel-shaped attachment (26) remote from the filling aperture (8) of the mould (4) is a supporting table (33) for the foodstuff (36) to be reshaped

15. An apparatus according to claim 14, characterized in that the area of the supporting table (33), the adjoining portion (31) of the wall of the funnel-shaped attachment (26), and the associated wall portion of the tubular side wall (6) of the mould (4) form a smooth, straight, preferably flat sliding surface for the foodstuffs (36) to be reshaped.

16. An apparatus according to claim 15, characterized in that the mould (4), the funnel-shaped attachment (26), and the table (33) are connected unitarily or by self-substance in the portion of the sliding surface.

17. An apparatus according to claim 15, characterized in that the funnel-shaped attachment (26) is convexly bounded outwards in the portion (28) opposite the sliding surface.

18. An apparatus according to claim 11, characterized in that the piston rod (35) bearing the plunger (34) is longitudinally displaceable with its axis substantially on the central axis (11) defined by the tubular side wall (6) of the mould (4).

## Revendications

1. Dispositif pour mettre des denrées alimentaires, notamment des produits carnés, à une forme prédéterminée, comportant, agencé sur un bâti (2), un moule (4) présentant une pièce tubulaire qui constitue des parois latérales (6) du moule et dont une extrémité constitue une ouverture de remplissage (8) du moule (4), pour l'introduction de la denrée alimentaire, ladite pièce tubulaire étant munie, en cette extrémité, d'un raccord en forme d'entonnoir (26) dont la section droite est en son point le plus étroit égale à la section droite de l'ouverture de remplissage (8) et dont la surface de la section droite est croissante en s'éloignant de l'ouverture de remplissage (8), et un poinçon (34) qui est mobile sur le bâti (2) et peut être amené, par l'ouverture de remplissage (8), dans le moule (4) et hors de celui-ci, caractérisé par le fait que l'extrémité de la pièce tubulaire située à l'opposé de l'ouverture de remplissage (8) constitue une ouverture de sortie (9) du moule (4), par le fait qu'il est prévu à cette extrémité de la pièce tubulaire un fond (7) qui est monté mobile en translation sensiblement perpendiculairement à l'une des parois latérales (6) de la pièce tubulaire et qui peut être déplacé entre une position dans laquelle l'ouverture de sortie (9) est fermée et une autre position dans laquelle l'ouverture de sortie (9) est ouverte, par le fait que l'ouverture de sortie (9) présente la même surface de section droite et la même forme de section droite que l'ouverture de remplissage (8) et par le fait que le raccord en forme d'entonnoir (26) s'étend, dans une région (31) de sa paroi, dans le prolongement de la région conjuguée de la paroi latérale correspondante (6) de la pièce tubulaire.

2. Dispositif selon revendication 1, caractéisé par le fait que la paroi latérale (6) qui, par elle-même est fermée, délimite un volume prismatique dans lequel la section droite dans chaque plan parallèle à l'ouverture de remplissage (8) est égale à la section droite de l'ouverture de remplissage (8).

3. Dispositif selon revendication 2, caractérisé par le fait que la section droite est rectangulaire.

4. Dispositif selon revendication 1, caractérisé par le fait que le fond (7) du moule (4) est monté mobile et est agencé à l'extrémité que la pièce tubulaire, formée par la paroi latérale (6) fermée en soi, comporte à l'opposé de l'ouverture de remplissage (8).

5. Dispositif selon revendication 1, caractérisé par le fait que des organes de guidage (12.. 15) pour le fond (7) sont prévus en des endroits fixes, à côté du moule (4).

6. Dispositif selon revendication 5, caractérisé par le fait que les organes de guidage sont réalisés en forme de colonnettes (12.. 15), disposées par paires, côte à côte et à une certaine distance les unes des autres, parallèlement sur le bâti (2), sur deux côtés opposés, à côté du moule (4), par le fait que les colonnettes de chaque paire (12, 13 ; 14, 15) sont écartées l'une de l'autre de manière correspondant à l'épaisseur du fond (7), et par le fait que le fond (7) est déplaçable entre les colonnettes de chaque paire (12, 13 ; 14, 15).

7. Dispositif selon revendication 1, caractérisé par le fait que le fond (7) est constitué par une plaque plane à faces parallèles.

8. Dispositif selon revendication 4, caractérisé par le fait que le fond (7) est couplé à un dispositif d'actionnement (24) par lequel le fond (7) est mobile en va-et-vient entre ses deux positions.

9. Dispositif selon revendication 8, caractérisé par le fait que, pour le couplage au dispositif d'actionnement associé (24), le fond (7) porte un prolongement (21) à bords plats, dont l'épaisseur correspond à celle du fond (7) et dont la longueur est plus grande que la course de déplacement du fond (7) entre la position ouverte et la position fermée du moule (4).

10. Dispositif selon revendication 1, caractérisé par le fait que le poinçon (34) est monté sur un organe mobile (35) d'un dispositif d'actionnement (5).

11. Dispositif selon les revendications 8 ou 9, caractérisé par le fait que le dispositif d'actionnement (5, 24) pour le poinçon (34) et/ou pour le fond (7) est constitué par un vérin à fluide sous pression, de préférence par un vérin à air comprimé, dont la ou les tige(s) de piston (23, 35) est (sont) liée(s) au fond (7), ou au poinçon (34).

12. Dispositif selon revendication 1, caractérisé par le fait que la section droite du raccord en forme d'entonnoir (26) présente une forme qui est à peu près semblable à la forme de la section droite du volume intérieur du moule (4), mesurée dans un plan parallèle à l'ouverture de remplissage (8).

13. Dispositif selon revendication 1, caractérisé par le fait que le raccord en forme d'entonnoir (26), mesuré dans un plan parallèle à son axe longitudinal (11), présente un angle d'ouverture d'environ 30°.

14. Dispositif selon revendication 1, caractérisé par le fait qu'entre le pinçon (34) se trouvant à sa position rétractée et l'extrémité du raccord en forme d'entonnoir (26) éloignée de l'ouverture de remplissage (8) du moule (4) est agencée une table d'appui (33) pour la denrée alimentaire (36) à façonner en forme.

15. Dispositif selon revendication 14, caractérisé par le fait que la surface de la table d'appui (33), la région lui succédant (31) de la paroi du raccord en forme d'entonnoir (26) et la zone y afférente de la paroi latérale (6) fermée en soi du moule (4) forment une surface lisse et droite, de préférence une surface de glissement plane, pour la denrée alimentaire (36) à façonner en forme.

16. Dispositif selon revendication 15, caractérisé par le fait que le moule (4), le raccord en forme d'entonnoir (26) et la table (33) sont d'un seul tenant ou reliés par de la matière dans la région de la surface de glissement.

17. Dispositif selon revendication 15, caractérisé par le fait que le raccord en forme d'entonnoir (26) est bombé, avec convexité tournée vers l'extérieur, dans la région (28) en vis-à-vis de la surface de glissement.

18. Dispositif selon revendication 11, caractérisé par le fait que la tige de piston (35) portant le poinçon (34) est déplaçable longitudinalement avec son axe sensiblement sur l'axe central (11) défini par la paroi latérale (6), fermée en soi, du moule (4).

Fig. 1

EP 0 282 769 B1

Fig. 2

Fig. 3

EP 0 282 769 B1